# EUROPEAN PATENT SPECIFICATION

(11) **EP 3 272 576 B1**
(45) Date of publication and mention of the grant of the patent: **12.06.2019**
(21) Application number: 17181605.1
(22) Date of filing: 17.07.2017
(51) Int. Cl.: B60N 2/015, B62D 25/20

(54) **A COMPONENT FOR OUTFITTING VEHICLE INTERIORS**
EIN BAUELEMENT ZUR AUSSTATTUNG DER FAHRZEUGINNENRÄUME
UN COMPOSANT POUR ÉQUIPER DES INTÉRIEURS DE VÉHICULE

(30) Priority: 20.07.2016 IT 201600076154
(43) Date of publication of application: 24.01.2018
(73) Proprietor: IVECO S.p.A., 10156 Torino (IT)
(72) Inventor: MUSSA, Elio, 10148 Torino (IT)
(74) Representative: Faraldi, Marco

(56) References cited:
- EP-A1- 2 664 489
- WO-A1-2010/097221
- FR-A1- 3 022 501

## Description

The present invention generally relates to equipment and techniques for outfitting a vehicle's interior spaces, in particular a commercial vehicle such as a van or a bus.

It is known in the art to provide interior coverings such as floor or side coverings equipped with anchorage systems for anchoring equipment such as seats, furniture or other equipment inside vehicles.

A known system is to use a covering formed of a steel truss fastened to the structure of the vehicle and formed of a plurality of longitudinal beams and a plurality of transverse beams connected to each other, and paneling fixed to the truss. In such a known system, anchorage guides are used for anchoring the equipment, of the type consisting of an aluminum bar having a regular array of aligned apertures between which slots that are narrower than the apertures are interposed. The anchorage guides are fastened by means of screws along the longitudinal beams of the covering.

This known system entails a certain complexity of installation, since it requires the holes on the beam for fastening the anchorage guides to be made in place, i.e. with the truss of the covering mounted on the vehicle, by using masks to correctly position the holes created.

Another known system involves the use of aluminum panels fastened directly to the vehicle structure. According to such system, a set of smooth panels and panels equipped with anchorage guides are fixed and assembled within the vehicle according to the required configuration.

However, such aluminum panel-based system has the disadvantage of having a higher cost and weight than the steel beam-based system. EP2664489 discloses a component for outfitting vehicle interiors, comprising a steel beam having a square or rectangular cross-section, and an anchorage guide provided for anchorage of equipment.

An object of the present invention is therefore to provide an outfitting system that is both quick to install and relatively cost-effective.

In view of this aim, the object of the invention is a component for outfitting vehicle interiors comprising a steel beam having a square or rectangular cross-section and an anchorage guide provided for anchoring equipment and consisting of an aluminum bar fastened to a side of the beam, hereinafter the guide mounting side, said anchorage guide having a regular array of aligned apertures between which slots that are narrower than the apertures are interposed,
wherein the guide mounting side of the beam has a longitudinal slot extending over the entire length of the beam, and the anchorage guide is connected by means of screws to a guide fastening plate inserted within the hollow beam, the screws extending through the longitudinal slot to clamp the guide mounting side of the beam between the anchorage guide and guide fastening plate.

An inner covering using one or more components according to the invention exhibits great simplicity and speed of installation.

In fact, there is no need to make the fastening holes on the beams for the anchorage guides as the guides may be used already connected to the respective fastening plates and then slid along the longitudinal slots of the beams until they reach their respective mounting positions. Once the correct mounting position of an anchorage guide is reached, the screws that connect it to the respective fastening plate are simply tightened to clamp the anchorage guide to the beam.

Moreover, an inner covering using one or more components according to the invention has a lower weight than the aluminum panel-based systems, since it uses much less metal material than the latter, with the same covered surface. This also entails a lower cost of materials, especially if one considers that steel generally has a lower cost than aluminum.

Preferred forms of the invention are defined in the dependent claims, which are intended as an integral part of the present description.

Further features and advantages of the invention will become more apparent in the following detailed description of an embodiment of the invention, made with reference to the appended drawings, provided purely to be illustrative and non-limiting, wherein
figure 1 is a perspective view of a floor of a vehicle fitted with seats;
figure 2 is a perspective view of a support truss of the floor of figure 1; and
figure 3 is a detail of a longitudinal beam of the truss of figure 2 coupled to an anchorage guide; and
figure 4 is a sectional view of the detail of figure 3, within a floor of a vehicle.

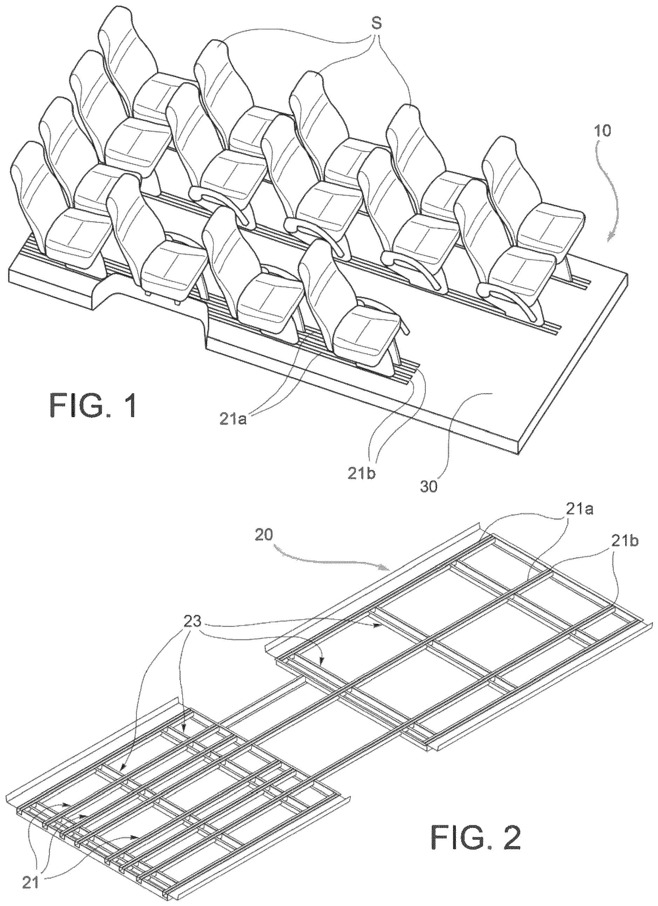

With reference to figure 1, a floor of a vehicle for transporting persons is shown, indicated collectively at 10, fastenable to a vehicle floor (not shown). A plurality of equipment elements S, in this case seats, are fixed to the floor 10. The invention is not, however, limited to such type of application, being usable for the anchorage of other equipment elements and/or other outfitting components, for example other types of interior coverings such as side coverings applied to the vehicle walls.

With reference also to figure 2, the floor 10 comprises a support truss 20 formed by a plurality of steel longitudinal beams 21 and a plurality of steel transverse beams 23 securely connected to each other, in particular by welding, and a panel 30 fixed to the truss 10, adapted to define the tread surface of the floor. Some of the transverse beams 23 have holes (not shown) provided for fastening them to the vehicle floor by means of screws.

Each of the longitudinal beams 21 is composed of a beam having a square or rectangular hollow section, on one side 21a of which a longitudinal slit 21b is made extending for the entire length of the beam, which defines a sub-frame under the side 21a of the beam. Preferably, for issues of lightness and simplicity of construction, the beam is of a type having a C-shaped cross-section.

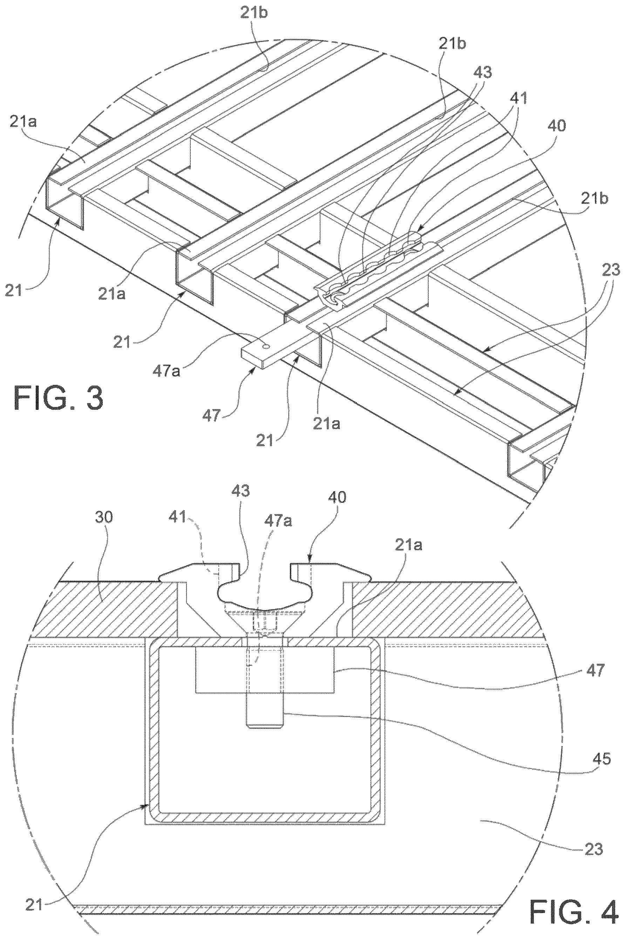

For the anchorage of seats S, a plurality of anchorage guides 40 are provided on the longitudinal beams, one of which is shown in figures 3 and 4.

The anchorage guide 40 provided for the anchorage of equipment is of a known type consisting of an aluminum bar having a regular array of aligned apertures or blind holes 41, between which are interposed connection slots which connect the holes 41 and which are narrower than the same. The side walls of the anchorage guide 40 at each of the slots 43 define a sub-frame.

The anchorage guide 40 is fastened to the side 21a of the longitudinal beam 21 provided with the longitudinal groove 21b, which will hereinafter be referred to as the guide mounting side.

To this end, the anchorage guide 40 is connected by means of screws 45 to a guide fastening plate 47 having a width greater than that of the longitudinal slot 21b of the beam 21. The guide fastening plate 47 is provided with threaded holes 47a for inserting the stems of the screws 45, whereas the heads of the screws are housed in seats made on a bottom wall of the anchorage guide 40. The anchorage guide 40 is connected to the guide fastening plate 47 by means of at least two screws 45 spaced apart from one another along the longitudinal direction of the anchorage guide 40.

The guide fastening plate 47 is inserted inside the hollow beam 21 and the screws 45 are thus extended through the longitudinal slot 21b of the beam so as to clamp the guide mounting side 21a of the beam 21 between the anchorage guide 40 and the guide fastening plate 47.

For mounting the anchorage guide 40 to the beam 21, the connection between the anchorage guide 40 and the guide fastening plate 47 is initially ensured by means of the screws 45. The assembly formed of the anchorage guide 40 and the guide fastening plate 47 is then passed from one end of the hollow beam 21 by inserting the guide fastening plate 47 inside the hollow beam 21 and passing the stems of the screws 45 through the longitudinal slot 21b of the beam 21. The assembly formed by the anchorage guide 40 and the guide fastening plate 47 is then slid along the beam 21 until the desired mounting position is reached.

Once this position is reached, the screws 45 are tightened, thereby clamping the guide mounting side 21a of the beam 21 between the anchorage guide 40 and the guide fastening plate 47.

## Claims

1. A component for outfitting vehicle interiors, comprising a steel beam (21) having a square or rectangular cross-section, and an anchorage guide (40) provided for anchorage of equipment (S) and consisting of an aluminum bar fastened to a side (21a) of the beam (21), hereinafter guide mounting side, said anchorage guide (40) having a regular array of aligned apertures (41) between which are interposed slots (43) narrower than the apertures (41)
**characterized in that** the guide mounting side (21a) of the beam (21) has a longitudinal slot (21b) extending along the entire length of the beam (21), and that the anchorage guide (40) is connected by means of screws (45) to a guide fastening plate (47) inserted within the beam (21), the screws (45) extending through the longitudinal slot (21b) to clamp the guide mounting side (21a) of the beam (21) between the anchorage guide (40) and guide fastening plate (47).

2. A component according to claim 1, wherein the beam (21) has a C-shaped cross-section.

3. A component according to claim 1 or 2, wherein the guide fastening plate (47) is provided with threaded bores (47a) for receiving stems of the screws (45).

4. A component according to any of the preceding claims, wherein the anchorage guide (40) is connected to the guide fastening plate (47) by means of at least two screws (45) spaced out from one another along the longitudinal direction of the anchorage guide (40).

5. An inner covering for vehicles, comprising a truss (20) formed by a plurality of longitudinal beams (21) and a plurality of transverse beams (23) connected to one another, and a paneling (30) fastened to the truss (20), wherein at least one of the longitudinal beams (21) is composed of a component according to any of the preceding claims.

## Patentansprüche

1. Bauelement zur Ausstattung von Fahrzeuginnenräumen, umfassend einen Stahlträger (21) mit einem quadratischen oder rechteckigen Querschnitt und eine Ankerführung (40) zur Verankerung einer Ausstattung (S) und bestehend aus einem Aluminiumträger, der an einer Seite (21a) des Trägers (21) befestigt ist, nachfolgend als Führungsmontageseite bezeichnet, welche Ankerführung (40) ein regelmäßiges Raster ausgerichteter Öffnungen (41) aufweist, zwischen welchen Schlitze (43) angeordnet sind, die schmaler sind als die Öffnungen (41),
**dadurch gekennzeichnet, dass** die Führungsmontageseite (41a) des Trägers (21) einen Längsschlitz (21b) aufweist, der sich über die gesamte Länge des Trägers (21) erstreckt, und dass die Ankerführung (40) mittels Schrauben (45) mit einer Führungsbefestigungsplatte (47) verbunden ist, die in den Träger (21) eingesetzt ist, wobei die Schrauben (45) sich durch den Längsschlitz (21b) erstrecken, um die Führungsmontageseite (21b) des Trägers (21) zwischen der Ankerführung (40) und der Führungsbefestigungsplatte (47) festzuklemmen.

2. Ein Bauelement gemäß Anspruch 1, bei welchem der Träger (21) einen C-förmigen Querschnitt aufweist.

3. Ein Bauelement gemäß Anspruch 1 oder 2, bei welchem die Führungsbefestigungsplatte **(47)** mit Gewindebohrungen (47a) zur Aufnahme der Schäfte der Schrauben (45) versehen ist.

4. Ein Bauelement gemäß einem der vorhergehenden Ansprüche, bei welchem die Ankerführung (40) mit der Führungsbefestigungsplatte (47) durch zumindest zwei Schrauben (45) verbunden ist, welche voneinander entlang der Längsrichtung der Ankerführung (40) versetzt sind.

5. Innenauskleidung für Fahrzeuge, umfassend ein Tragwerk (20), gebildet aus einer Mehrzahl von Längsträgern (21) und einer Mehrzahl von Querträgern (23), die miteinander verbunden sind, und eine Verkleidung (30), die an dem Tragwerk (20) befestigt ist, wobei zumindest einer der Längsträger (21) aus einem Bauelement gemäß einem der vorhergehenden Ansprüche gebildet wird.

## Revendications

1. Composant pour équiper des intérieurs de véhicule, comprenant une poutre en acier (21) ayant une section transversale carrée ou rectangulaire, et un guide d'ancrage (40) prévu pour l'ancrage de l'équipement (S) et se composant d'une barre en aluminium fixée sur un côté (21a) de la poutre (21), ci-après côté de montage guide, ledit guide d'ancrage (40) ayant un réseau régulier d'ouvertures alignées (41) entre lesquelles sont intercalées des fentes (43) plus étroites que les ouvertures (41),
**caractérisé en ce que** le côté de montage guide (21a) de la poutre (21) a une fente longitudinale (21b) s'étendant le long de toute la longueur de la poutre (21) et **en ce que** le guide d'ancrage (40) est raccordé au moyen de vis (45) à une plaque de fixation de guidage (47) insérée à l'intérieur de la poutre (21), les vis (45) s'étendant à travers la fente longitudinale (21b) pour serrer le côté de montage guide (21a) de la poutre (21) entre le guide d'ancrage (40) et la plaque de fixation de guidage (47).

2. Composant selon la revendication 1, dans lequel la poutre (21) a une section transversale en forme de C.

3. Composant selon la revendication 1 ou 2, dans lequel la plaque de fixation de guidage (47) est prévue avec des alésages filetés (47a) pour recevoir les tiges des vis (45).

4. Composant selon l'une quelconque des revendications précédentes, dans lequel le guide d'ancrage (40) est raccordé à la plaque de fixation de guidage (47) au moyen d'au moins deux vis (45) espacées l'une de l'autre le long de la direction longitudinale du guide d'ancrage (40).

5. Revêtement interne pour véhicules, comprenant un treillis (20) formé par une pluralité de poutres longitudinales (21) et une pluralité de poutres transversales (23) raccordées entre elles, et un panneau (30) fixé au treillis (20), dans lequel au moins l'une des poutres longitudinales (21) est composée d'un composant selon l'une quelconque des revendications précédentes.
